# EUROPEAN PATENT SPECIFICATION

(11) **EP 2 616 172 B1**
(45) Date of publication and mention of the grant of the patent: **19.03.2014**
(21) Application number: 11746245.7
(22) Date of filing: 22.08.2011
(51) Int. Cl.: B01J 20/08, B01J 20/28

(54) **AN ALUMINA BLOCK FILTER MEDIA**
ALUMINIUMBLOCKFILTERMEDIEN
MILIEU FILTRANT À BLOC D'ALUMINE

(30) Priority: 29.10.2010 EP 10189498; 16.09.2010 IN MU25602010
(43) Date of publication of application: 24.07.2013
(73) Proprietor: Unilever NV, 3013 AL Rotterdam (NL); Unilever PLC, London, Greater London EC4Y 0DY (GB)
(72) Inventor: ABDUL KAREEM, Shajahan, Bangalore 560 066 (IN); CHATTERJEE, Jaideep, Bangalore 560 066 (IN); GUPTA, Santosh Kumar, Bangalore 560 066 (IN); PRATAP, Shailendra, Bangalore 560 066 (IN); RAMACHANDRAN, Rajeesh Kumar, Bangalore 560 066 (IN)
(74) Representative: Rosen Jacobson, Frans Lucas M.
(86) International application number: PCT/EP2011/064359
(87) International publication number: WO 2012/034822

(56) References cited:
- EP-A1- 2 177 252
- WO-A2-00/35559
- WO-A2-2010/086079
- US-A1- 2003 140 785

## Description

### TECHNICAL FIELD

The present invention relates to an activated alumina block filter media and a process for preparation of the alumina block, for use in gravity fed water filters and pressurized water filters for efficiently filtering particulate contaminants including microorganisms like cysts, bacteria and virus apart from removal of chemical contaminants while at the same time providing for relatively high flow rates.

Any discussion of the prior art throughout the specification should in no way be considered as an admission that such prior art is widely known or forms part of the common general knowledge in the field.

### BACKGROUND AND PRIOR ART

Fluids such as liquid or gases typically contain contaminants, which include particulate, chemicals and organisms. In liquids like water, especially drinking water, it is desirable to remove the harmful contaminants from the liquids before consuming them so as to maintain proper hygiene and safe conditions for maintenance of good health.

Several different methods are known for filtration of water based on which various devices and apparatus have been designed and are also commercially available. These methods and devices vary depending on whether the application is for industrial use or for household use.

The gravity flow systems suffer from the inherent disadvantage of low pressure and it has always been a challenge to provide for gravity-fed filters which would have effective flow rates and at the same time desired filterability and acceptable adsorption kinetics.

Carbon block filter media comprising powder activated carbon of a selected particle size distribution and binder material having selected melt flow characteristics and specified particle size distribution which provides for desired filtration of micro particles including microorganisms like cysts, bacteria and virus while consistently giving desired high flow rates under gravity flow conditions are known.

US5505892 (Domme, 1996) describes a process for manufacturing a filter unit made as a moulded absorbent element permeable to gases and liquids, comprising (i) mixing granules of absorbent medium and a granular organic thermoplastic binder medium (ii) placing in a mould and compressing it (iii) heating to a temperature of about 330 to 350°C until partial coking of the binder medium occurs and (iv) cooling. The publication describes use of carbon of the granular type i.e of granule size 2 mm to 3 mm.

EP 0345381 (American Cyanamid, 1989) describes a filter structure for use in the purification of a liquid comprising activated carbon particles entrapped within a porous plastic matrix wherein the size of the activated carbon particles is substantially within the range of from less than about 5 microns to about 150 microns. The publication describes these extremely fine carbon particles being bonded with thermoplastic bonding agents of sizes substantially greater than on average, the particle size of the activated carbon particles. The activated carbon particles are described to be preferably uniformly distributed throughout the porous plastic matrix structure.

The above prior art describes filter units comprising carbon particles of either very high granularity or very fine carbon dust and would not be suitable to meet the high demands of micro particle especially microorganism separation from water filtered under low gravity head while consistently maintaining the desired high flow throughput.

US 7332088 (2008), discloses a method for the removal of biological species, such as Cryptosporidium, from water using aluminium based media which contains surface Al-OH groups. It also discloses that the preferred aluminium based medium is alumina which is hydrated at the surface so as to form surface Al--OH groups for the direct adsorption of suitable biological species and depending on the application the particle sizes will be between 500 microns (0.5 mm) to 13 mm. This relates only to column of Alumina particles and not to a bound block.

WO2010/086079 (Unilever), discloses a filter comprising a carbon block enveloped with spirally wound layer of non-pleated and pleated layer and the fabric layers are essential to achieve the required microbiological purity in terms of cyst removal and does not disclose the use of alternate granular material. The present inventors have found that by selection of special grade of activated alumina is essential for use in water filters to provide excellent particulate removal including micro-organisms like cysts and can eliminate the requirement of the fabric layers.

EP 2177252 (Unilever), discloses a process for preparing metal incorporated carbon block filters but does not disclose selection of special grade of activated alumina for use in water filters that provides excellent particulate removal including microorganisms like cysts, bacteria and virus while giving the desired flow rate.

US2003140785 (Koslow Evan E) discloses a microbiological interception enhanced filter medium comprising a microporous structure having a mean flow path of less than about 2 microns and made of an array of active particles and at least a portion of the surface of microporous structure is coated with a microbiological interception enhancing agent comprising a cationic material in combination with a biologically active metal to provide greater than about 4 log viral interception, and greater than about 6 log bacterial interception.

According to the disclosure in US2003140785 it is essential to provide a coating with a microbiological interception enhancing agent comprising a cationic material in combination with a biologically active metal on granular particles. Coating is possible on carbon particles because of charge differences, but coating on alumina particles having positive surface charge (pH< 9), will be difficult due to similar nature of charge (positive) on active particle and polymer. The present inventors have eliminated the additional step of coating the particles with a microbiological interception enhancing agent comprising a cationic material in combination with a biologically active metal and solved to problem by selecting particular grade of activated alumina by defining its particle size range and the BET surface area and have found that the performance criteria is not met in the absence of this selection.

The present inventors have found that a bound block made of special grade of activated alumina for use in water filters provides excellent particulate removal including micro-organisms like cysts, bacteria and virus while giving the desired flow rate. It is known that positively charged media provide significant advantage in colloid filtration, since most naturally occurring colloids develop negative surface charge in pH neutral water. The present inventors have found that the above criterion alone does not provide sufficient selectivity for use as filtration media. It has now been found that selection particular activated alumina for use as water filtration media and binding loose granular activated alumina into a block using suitable binders provide desired particulate removal including microorganisms like cysts, bacteria and virus while giving the desired flow rate. Another advantage of using Alumina over carbon is that the alumina block will neutralize the alkalinity generated by the use of some of the biocide e.g. Hypochlorites.

The use of Alumina reduces the dependence on activated carbon which is the filter media generally used in water purifiers thus giving cost benefit. It has been claimed that alumina can also remove heavy metals such as arsenic from input water which is not effectively done by the use of carbon.

It is thus the basic object of the present invention to provide for a filtration media for use in gravity fed water filters and pressurized water filters which would provide for the desired particulate removal including micro-organisms like cysts, bacteria and virus while giving the desired flow rate.

Another object of the present invention is directed to provide for a filter media adapted for use in gravity fed water filters and pressurized water filters which would provide a high flow rate for gravity fed filter with desired removal of chemicals including pesticides and removal of bad odour.

Yet another object is directed to the gravity fed filtration system which would be simple to manufacture and would be cost effective to meet the present day extensive demand for such filters for domestic/rural use and thus provide safe drinking water for one and all.

### SUMMARY OF THE INVENTION:

According to the present invention there is provided an alumina block filter media for use in gravity fed water filters and pressurized water filters comprising:
(a) activated alumina having a particle size in the range of 100 to 1000 microns and with a BET surface area in the range 200 to 1000 m²/g; and
(b) a binder material with a Melt Flow Rate (MFR) of less than 5;
wherein the ratio of activated alumina particles to the binder is in the range of 1:1 to 20:1 by weight; and wherein the pore volume of the alumina filter block is in the range 0.1 cc/g to 0.5 cc/g and the bulk density of the activated alumina is less than 1.

According to another aspect of the present invention there is provided a water filter for use in gravity fed water filters and pressurized water applications comprising:
(a) an alumina block filter media comprising activated alumina particles having a particle size in the range of 100 to 1000 microns and with a BET surface area in the range 200 to 1000 m²/g and the binder material with a Melt Flow Rate (MFR) of less than 5 wherein the ratio of activated alumina particles to the binder is in the range of 1:1 to 20:1 by weight, wherein the pore volume of the alumina filter block is in the range of 0.1 cc/g to 0.5 cc/g and wherein the bulk density of the activated alumina is less than 1;
(b) a base plate with an orifice to which the alumina block is adhered.

According to yet another aspect of the present invention there is provided a process for the preparation of an alumina block filter media comprising the steps of
(a) intimately mixing powder activated alumina having a particle size in the range of 100 to 1000 microns and with a BET surface area in the range 200 to 1000 m²/g with binder material having a Melt Flow Rate (MFR) of less than 5 in a mixer in a ratio of activated alumina particles to the binder in the range of 1:1 to 20:1 by weight, wherein the pore volume of the alumina filter block is in the range of 0.1 cc/g to 0.5 cc/g and wherein the bulk density of the activated alumina is less than 1;
(b) compacting the mix in a mould of desired shape and size by applying a pressure of not more 20 kg/cm²
(c) heating the mould to selective temperature
(d) cooling the mould and releasing the activated alumina block from the mould.

The term "comprising" is meant not to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above. For the avoidance of doubt, any feature of one aspect of the present invention may be utilised in any other aspect of the invention.

### DETAILED DESCRIPTION OF THE INVENTION:

According to the present invention there is provided an alumina block filter media for use in gravity fed water filters and pressurized water filters comprising:
(a) activated alumina having a particle size in the range of 100 to 1000 microns and the BET surface area in the range 200 to 1000 m²/g; and
(b) a binder material with a Melt Flow Rate (MFR) of less than 5;
   wherein the ratio of activated alumina particles to the binder is in the range of 1:1 to 20:1 by weight, and wherein the pore volume of the alumina filter block is in the range of 0.1 cc/g to 0.5 cc/g and wherein the bulk density of the activated alumina is less than 1.

The invention also relates to a process for the preparation of the Alumina block.

The proportion of the activated alumina particles to the binder is in the range of 1:1 to 20:1 by weight, preferably in the range of 1:1 to 10:1, more preferably in the range of 2:1 to 6:1.

The BET surface area of the activated alumina particles is in the range 200 to 1000 m²/g, more preferably 200 to 500 m²/g. The BET surface area is as measured by nitrogen adsorption isotherm method.

The pore volume of the activated alumina used in the filter block is in the range 0.1 cc/g to 0.5 cc/g and preferably 0.2 to 0.4 cc/g. The pore volume is measured by nitrogen adsorption isotherm.

Bulk density of the activated alumina is less than 1.

The binder material is selected to have a melt flow rate (MFR) of less than 5, preferably less than 2, more preferably less then 1. The binder material preferably has a mean particle size from 10 microns to 100 microns.

The melt-flow rate (MFR) is measured using ASTM D 1238 (ISO 1133) test. The test measures the flow of a molten polymer through an extrusion plastometer under specific temperature and load conditions. The extrusion plastometer consists of a vertical cylinder with a small die of 2 mm at the bottom and a removable piston at the top. A charge of material is placed in the cylinder and preheated for several minutes. The piston is placed on top of the molten polymer and its weight forces the polymer through the die and on to a collecting plate. The time interval for the test ranges from 15 seconds to 6 minutes in order to accommodate the different viscosities of plastics. Temperatures used are 190, 220, 250 and 300°C. Loads used are 1.2, 5, 10 and 21.6 kg.

The amount of polymer collected after a specific interval is weighed and normalized to the number of grams that would have been extruded in 10 minutes: melt flow rate is expressed in grams per reference time. Here, the MFR is expressed in grams per 10 minutes.

The MFR of the binder material preferably is the MFR at the temperature and load conditions common for that particular material. Examples of common conditions for polymer materials are presented in the below table.

| **Common Melt Flow Rate Conditions by Material** | |
|---|---|
| **Material** | **Temperature/Load** |
| PS | 200°C / 5.00 kg |
| PE | 190°C / 2.16 kg |
| | 190°C / 0.325 kg |
| | 190°C / 21.60 kg |
| | 190°C / 5.00 kg |
| PP | 230°C / 2.16 kg |
| ABS | 220°C / 10.00 kg |
| PS-I | 200°C / 5.00 kg |
| ENAC | 150°C / 2.16 kg |
| | 190°C / 2.16kg |
| | 125°C / 0.325 kg |
| SAN | 220°C / 10.00 kg |
| ASA, ACS, AES | 220°C / 10.00 kg |
| PC | 300°C / 1.20 kg |
| PMMA | 230°C / 3.80 kg |
| PB | 190°C / 2.16 kg |
| PB | 190°C / 10. 00 kg |
| POM | 190°C / 2.16 kg |
| MABS | 220°C / 10.00 kg |

It is particularly preferred that the MFR of the binder material is the MFR at 190°C and 21.6 kg load.

The binder material is preferably thermoplastic polymers having the low MFR values above described. Suitable examples include ultra high molecular weight polymer preferably polyethylene or polypropylene which have these low MFR values. The molecular weight is preferably in the range of 10⁶ to 10⁹. Binders of this class are commercially available under the trade names HOSTALEN from Ticona GMBH, GUR, Sunfine (from Asahi, Japan), Hizex (from Mitsubishi) and from Brasken Corp (Brazil). Other suitable binders include LDPE sold as Lupolen (from Basel Polyolefins) and LLDPE from Qunos (Australia).

It is possible to incorporate other filter materials like activated carbon, silica, zeolite etc upto about 50% of the weight of Activated alumina. However, it is preferred that the filter block is made of only activated alumina without the use of other filter materials.

The Alumina block filter of the invention is suitable for gravity fed filtration and can preferably be used along with other known filtration media such as sediment filters for removing fine dust and other micro-particulates generally above 3 microns. For example, the sediment filter is suitably a washable or replaceable non-woven natural or synthetic fibrous material and is preferably a microporous fabric with hydrophilic character.

The Alumina block filter preferably is further provided with a particulate filter that is a single or multi-layered non-woven fibrous-fabric filter wherein the outermost layer is pleated. The filter could alternatively comprise a combination of a pleated and spirally wound fabric filter.

The Alumina block filter of the invention may be shaped and sized according to its desired end use. Suitable shapes include a flat circular disc of low thickness, a square disc of low thickness, a low height tapered flat disc, a hemispherical, a cylinder, a solid cone or a hollow cone.

The Alumina block filter of the invention is preferably adhered to a base plate with an orifice that allows water to exit and may be further fitted with a detachable cover to hold the entire filter as one integral unit.

Therefore, according to another aspect, the invention provides a water filter for use in gravity fed water filters and pressurized water applications comprising:
(a) an alumina block filter media comprising activated alumina particles having a particle size in the range of 100 to 1000 microns and with a BET surface area in the range 200 to 1000 m²/g and the binder material with a Melt Flow Rate (MFR) of less than 5 wherein the ratio of activated alumina particles to the binder is in the range of 1:1 to 20:1 by weight
(b) a base plate with an orifice to which the alumina block is adhered.

Here, the alumina block filter media is a media according to the first aspect of the invention.

According to another aspect of the present invention there is provided a process for the preparation of an alumina block filter media comprising the steps of
(a) intimately mixing powder activated alumina having a particle size in the range of 100 to 1000 microns and with a BET surface area in the range 200 to 1000 m²/g with binder material having a Melt Flow Rate (MFR) of less than 5 in a mixer in a ratio of activated alumina particles to the binder in the range of 1:1 to 20:1 by weight, wherein the pore volume of the alumina filter block is in the range of 0.1 cc/g to 0.5 cc/g and wherein the bulk density of the activated alumina is less than 1;
(b) compacting the mix in a mould of desired shape and size by applying a pressure of not more 20 kg/cm²;
(c) heating the mould to a temperature of 180 to 320°C;
(d) cooling the mould and releasing the activated alumina block from the mould.

The activated alumina particles are preferably mixed with water in a range 1:5 to 1:1 and the binder was added to this slurry. This mix is filled in the moulds of pre-selected size and shape and subjected to a pressure of not more than 20 kg/cm².

The mass is then placed in a mould of pre-selected size and shape and subjected to a pressure of not more than 20 kg/cm², preferably not more than 10 kg/cm². The pressure is preferably applied using either a hydraulic press or a pneumatic press, more preferably a hydraulic press.

The mould is preferably made either from aluminum, cast iron, steel or any material capable of withstanding temperatures of about 300° C.

A mould release agent is preferably coated on the inside surface of the mould. The mould release agent is preferably selected from either silicone oil, aluminum foil or any other commercially available mould release agent that has little or no adsorption onto activated Alumina.

The mould is then heated to a temperature of 150 to 400° C, preferably in the range of 180 to 320° C. The mould is preferably kept heated for a period to time more than 60 minutes, more preferably 90 to 300 minutes. The mould is preferably heated in an oven, preferably using a non-convection, forced air or forced inert-gas convection oven.

The mould is then cooled and the Alumina block released from the mould.

The details of the invention its objects and advantages are explained hereunder in greater detail in relation to non-limiting examples:

### EXAMPLES:

### Example 1:

### Preparation of Alumina filter block:

Various grades of activated alumina as indicated in Table 1 were used to prepare the blocks by mixing it with required amount of deionised water to prepare a moist mixture. To this mixture 25 gm of polyethylene binder (GUR 2122, Ticona, GmBH) was added and mixed thoroughly, to ensure that mixture is homogeneous. The MFR of GUR 2122 is <1 g/10min at 190°C and 21.6 kg load. The mixture was filled in a stainless steel hemispherical mould of 12 cm diameter with a hemispherical insert of 4 cm diameter which resulted in a radial path length of 4 cm.

The mixture was compressed to provide 5 kg/cm² pressure with the help of a hydraulic press, baked in an oven at 250°C for 2.30 hrs. The mould was removed from the oven and cooled to ambient temperature and the filter was demoulded. Grade 1 alumina has parameters outside the selected range according to the invention and Grades 2 and 3 are within the selected range of the invention.

**Table 1**

| Parameter | Grade 1 | Grade 2 | Grade 3 |
|---|---|---|---|
| Bulk density [g/cc] | 1.86 | 0.86 | 0.84 |
| BET Surface area (m²/g) | 0.04 | 256.4 | 284.7 |
| Pore volume (cc/g) | 0.0002 | 0.3183 | 0.2762 |
| Particle size (micron) | 200-600 | 500-1000 | 400-1000 |
| Weight used for making the block (G) | 525 | 275 | 285 |
| Supplier | Almatis Alumina Private Limited, Calcutta. | Nuchems, Bangalore | Siddhartha industries, Gujarat. |

### Example 2:

### Performance Evaluation:

### 2.1. Turbidity Reduction

The three Alumina filter blocks prepared from the three different grades of Alumina as described in Example 1 were fitted to a standard gravity fed water purifier and 9L of test water was passed through each of the different blocks at a flow rate of 200 and 400 ml/min. The composition of the test water is provided below in Table 2. The turbidity of input water and that of the output water was measured by using a turbidity meter (Merck, Turbiquant, 1500T) and the results are presented in Table 3. The chemicals were from Merck Limited, Mumbai, Humic acid was from Sigma- Aldrich, Germany and dust was from Powder Technology inc, USA.

**Table 2: Test Water Composition**

| Material | Concentration, ppm |
|---|---|
| Calcium chloride | 392 |
| Magnesium chloride | 173 |
| Sodium sulphate | 80 |
| Magnesium sulphate | 119 |
| Ferrous sulphate | 3 |
| Aluminium sulphate | 6 |
| Sodium bicarbonate | 826 |
| Humic acid | 2.5 |
| Dust | 15 |

**Table 3**

| | Grade 1 | Grade 2 | Grade 3 |
|---|---|---|---|
| % turbidity removal @ a flow rate of 200 ml/min | 95.4 | 99.82 | 99.80 |
| % turbidity removal @ a flow rate of 400 ml/min | <90 | 99.82 | 99.83 |

The results show that even at very high flow rate the alumina block according to the invention is effective in removing the turbidity caused by particulate material in water significantly over the control blocks.

### 2.2. Cyst removal efficiency.

Fluorescent latex microspheres (Polysciences Inc.) were used as surrogates for cysts, as a 2.5 wt% aqueous suspension (~1.68 x 10⁹ microspheres/ml). Polystyrene microspheres had an average size of 3 µm. Test water containing ~50000 microsphere particles per liter was used for the study. The initial and the final microsphere counts were determined by filtering diluted solution through a 0.45 µm Millipore filter paper (as per NSF 53 norms). The microsphere particles were counted using Olympus BX40 Florescence Microscope.

Test water used for microsphere removal was prepared by addition of 200 ppm of Calcium Chloride Dihydrate (CaCl₂.2H₂O) and 100 ppm of Sodium Bicarbonate (NaHCO₃) to 8 liters of water purified by Reverse Osmosis. Test water composition for microsphere evaluation is given in Table 4. Microsphere intermediate suspension was added to this water in a definite volume to get ~ 50000 counts of microsphere/L of solution. Turbidity of this Test water was 0.5-0.8 NTU, pH was 7-7.5 and TDS was ~300 ppm as NaCl. The three Alumina filter blocks prepared from the three different grades of Alumina as described in Example 1 were fitted to a standard gravity fed water purifier and 9L of test water was passed through each of the different blocks at a flow rate of 200 ml/min. Microspeheres removal data which are surrogates for cyst are presented in Table 5.

**Table 4: Composition of Test water for microsphere analysis.**

| Ingredients | Concentration |
|---|---|
| Calcium Chloride (CaCl₂.2H₂O) | 200 ppm |
| Sodium Bicarbonate (NaHCO₃) | 100 ppm |
| Polystyrene microsphere | Approx # 50000/Litre |

**Table 5**

| | Grade 1 | Grade 2 | Grade 3 |
|---|---|---|---|
| Log removal @ a flow rate 200 ml/min | 1.01 | 1.98 | 1.93 |

The results show that the alumina block according to the invention is significantly superior in providing microspheres which is an indication of cyst removal.

### Example 3:

### Performance Evaluation of Alumina-carbon block:

Alumina having particle size 75-600 micron (other physical parameters were same as Grade 3, mentioned in example 1) was mixed with activated carbon in a ratio 50:50 Wt.% and was moulded into a block as described in Example 1. The blocks were tested for Cyst removal and turbidity removal as per the procedure described in Example 2. The results are presented in Table 6.

**Table 6**

| Composition of carbon-alumina block (wt%) | Path length (cm) | Range of log cyst removal | Range of organic removal (%) |
|---|---|---|---|
| 50 - 50 | 4 | 4 - 4.44 | 98 - 100 |
| 50 - 50 | 3 | 4.33 - 4.44 | 95 - 100 |

The results show that it is possible mix other materials like carbon with selected grade of Alumina according to the invention and get the required cyst and turbidity removal.

## Claims

1. An alumina block filter media for use in gravity fed water filters and pressurized water filters comprising:
(a) activated alumina having a particle size In the range of 100 to 1000 microns with a BET surface area in the range 200 to 1000 m²/g: and
(b) a binder material with a Melt Flow Rate (MFR) of less than 5;
wherein the ratio of activated alumina particles to the binder is in the range of 1: 1 to 20: 1 by weight,
and wherein the pore volume of the alumina filter block is in the range 0.1 cc/g to 0.5 cc/g and the bulk density of the activated alumina is less than 1.

2. An alumina block filter media as claimed in claim 1 wherein the MFR of the binder material is less than 2.

3. An alumina block filter media as claimed in claim 2 wherein the MFR of the binder material is less than 1.

4. An alumina block filter media as claimed In any of the preceding claims wherein the ratio of the activated alumina particles to the binder is in the range of 2:1 to 6:1.

5. An alumina block filter media as claimed in any preceding claims wherein the binder material is selected from ultra high molecular weight polyethylene or polypropylene.

6. An alumina block filter media as claimed in claim 5 wherein the molecular weight of the binder material is in the range of 10⁶ to 10⁹.

7. A water filter for use in gravity fed water filters and pressurized water applications comprising:
(a) an alumina block filter media comprising activated alumina particles and the binder material as claimed in anyone of the preceding claims;
(b) a base plate with an orifice to which the alumina block Is adhered.

8. A process for the preparation of an alumina block filter media comprising the steps of
(a) intimately mixing powder activated alumina having a particle size in the range of 100 to 1000 microns and with a BET surface area in the range 200 to 1000 m²/g with binder material having a Melt Flow Rate (MFR) of less than 5 in a mixer a mixer in a ratio of activated alumina particles to the binder in the range of 1:1 to 20: 1 by weight, wherein the pore volume of the alumina filter block is in the range of 0.1 cc/g to 0.5 cc/g and wherein the bulk density of the activated alumina is less than 1 ;
(b) compacting the mix in a mould of desired shape and size by applying a pressure of not more 20 kg/cm²;
(c) heating the mould to selective temperature
(d) cooling the mould and releasing the activated alumina block from the mould.

9. A process for the preparation of an alumina block filter media as claimed in claim 8 wherein the mix is compacted in the mould of desired size and shape by applying a pressure of not more than 10 kg/cm².

10. A process for the preparation of an alumina block filter media as claimed in claim 8 to 9 wherein the mould is heated to a temperature of 150 to 400°C.

11. A process for the preparation of an alumina block filter media as claimed in claim 10 wherein the mould is heated to a temperature of 180 to 300°C.

## Patentansprüche

1. Filtermedium in Form eines Aluminiumoxidblocks für die Verwendung bei Wasserfiltern mit Schwerkraftbeschickung und Druckwasserfiltern, das Folgendes aufweist:
(a) aktiviertes Aluminiumoxid mit einer Teilchengröße im Bereich von 100 bis 1000 µm und einer spezifischen Oberfläche gemäß BET im Bereich von 200 bis 1000 m²/g und
(b) ein Bindemittel mit einer Schmelzfließrate (MFR) von weniger als 5, wobei das Gewichtsverhältnis zwischen aktivierten Aluminiumoxidteilchen und Bindemittel im Bereich von 1:1 1 bis 20:1 liegt und
wobei das Porenvolumen des Aluminiumoxidfilterblocks im Bereich von 0,1 bis 0,5 m³/g liegt und die Schüttdichte des aktivierten Aluminiumoxids weniger als 1 beträgt.

2. Filtermedium in Form eines Aluminiumoxidblocks nach Anspruch 1,
wobei die MFR des Bindemittels weniger als 2 beträgt.

3. Filtermedium in Form eines Aluminiumoxidblocks nach Anspruch 2,
wobei die MFR des Bindemittels weniger als 1 beträgt.

4. Filtermedium in Form eines Aluminiumoxidblocks nach einem der vorstehenden Ansprüche,
wobei das Verhältnis zwischen den aktivierten Aluminiumoxidteilchen und dem Bindemittel im Bereich von 2:1 bis 6:1 liegt.

5. Filtermedium in Form eines Aluminiumoxidblocks nach einem der vorstehenden Ansprüche,
wobei das Bindemittel aus Polyethylen oder Polypropylen mit extrem hohem Molekulargewicht ausgewählt ist.

6. Filtermedium in Form eines Aluminiumoxidblocks nach Anspruch 5,
wobei das Molekulargewicht des Bindemittels im Bereich von 10⁶ bis 10⁹ liegt.

7. Wasserfilter für die Verwendung bei Wasserfiltern mit Schwerkraftbeschickung und Druckwasserzwecken,
der Folgendes aufweist:
(a) ein Filtermedium in Form eines Aluminiumblocks, das aktivierte Aluminiumoxidteilchen und das Bindemittel nach einem der vorstehenden Ansprüche aufweist;
(b) eine Grundplatte mit einer Öffnung, an der der Aluminiumoxidblock haftet.

8. Verfahren zum Herstellen eines Filtermediums in Form eines Aluminiumoxidblocks,
das die folgenden Schritte aufweist:
(a) inniges Mischen von aktiviertem Aluminiumoxidpulver mit einer Teilchengröße im Bereich von 100 bis 1000 µm und einer Oberfläche gemäß BET im Bereich von 200 bis 1000 m²/g mit einem Bindemittel mit einer Schmelzfließrate (MFR) von weniger als 5 in einem Mischer in einem Gewichtsverhältnis zwischen aktivierten Aluminiumoxidteilchen und Bindemittel im Bereich von 1:1 1 bis 20:1, wobei das Porenvolumen des Aluminiumoxidfilterblocks im Bereich von 0,1 bis 0,5 cm³/g liegt und die Schüttdichte des aktivierten Aluminiumoxids weniger als 1 beträgt.
(b) Verdichten des Gemischs in einer Form mit der gewünschten Form und Größe durch Anwenden eines Drucks von nicht mehr als 20 kg/cm²
(c) Erhitzen der Form auf eine speziell ausgewählte Temperatur;
(d) Abkühlen der Form und Lösen des aktivieren Aluminiumoxidblocks aus der Form.

9. Verfahren zum Herstellen eines Filtermediums in Form eines Aluminiumoxidblocks nach Anspruch 8,
wobei das Gemisch in der Form mit der gewünschten Größe und Form durch Anwenden eines Druck von nicht mehr als 10 kg/cm² verdichtet wird.

10. Verfahren zum Herstellen eines Filtermediums in Form eines Aluminiumoxidblocks nach den Ansprüchen 8 und 9,
wobei die Form auf eine Temperatur von 150 bis 400 °C erhitzt wird.

11. Verfahren zum Herstellen eines Filtermediums in Form eines Aluminiumoxidblocks nach Anspruch 10,
wobei die Form auf eine Temperatur von 180 bis 300°C erhitzt wird.

## Revendications

1. Milieu filtrant à bloc d'alumine pour une utilisation dans des filtres à eau alimentés par gravité et des filtres à eau pressurisés, comprenant :
(a) une alumine activée possédant une taille de particule située dans la plage allant de 100 à 1000 microns et une surface spécifique BET située dans la plage allant de 200 m²/g à 1000 m²/g ; et
(b) un matériau liant présentant un indice de fluidité (MFR) inférieur à 5 ;
dans lequel le rapport entre les particules d'alumine activée et le liant est situé dans la plage allant de 1 : 1 à 20 : 1 en poids,
et dans lequel le volume des pores du bloc filtrant d'alumine est situé dans la plage allant de 0,1 cc/g à 0,5 cc/g et la densité apparente de l'alumine activée est inférieure à 1.

2. Milieu filtrant à bloc d'alumine selon la revendication 1, dans lequel le MFR du matériau liant est inférieur à 2.

3. Milieu filtrant à bloc d'alumine selon la revendication 2, dans lequel le MFR du matériau liant est inférieur à 1.

4. Milieu filtrant à bloc d'alumine selon l'une quelconque des revendications précédentes, dans lequel le rapport entre les particules d'alumine activée et le liant est situé dans la plage allant de 2 : 1 à 6 : 1.

5. Milieu filtrant à bloc d'alumine selon l'une quelconque des revendications précédentes, dans lequel le matériau liant est choisi parmi un polyéthylène ou polypropylène de poids moléculaire ultra élevé.

6. Milieu filtrant à bloc d'alumine selon la revendication 5, dans lequel le poids moléculaire du matériau liant est situé dans la plage allant de 10⁶ à 10⁹.

7. Filtre à eau pour une utilisation dans des filtres à eau alimentés par gravité et des applications pour eau pressurisée, comprenant :
(a) un milieu filtrant à bloc d'alumine comprenant des particules d'alumine activée et le matériau liant selon l'une quelconque des revendications précédentes ;
(b) une plaque de base ayant un orifice auquel adhère le bloc d'alumine.

8. Procédé de préparation d'un milieu filtrant à bloc d'alumine comprenant les étapes suivantes
(a) le mélange intime d'une alumine activée pulvérulente possédant une taille de particule située dans la plage allant de 100 à 1000 microns et une surface spécifique BET située dans la plage allant de 200 m²/g à 1000 m²/g avec un matériau liant présentant un indice de fluidité (MFR) inférieur à 5 dans un mélangeur, selon un rapport entre les particules d'alumine activée et le liant situé dans la plage allant de 1 : 1 à 20 : 1 en poids, dans lequel le volume des pores du bloc filtrant d'alumine est situé dans la plage allant de 0,1 cc/g à 0,5 cc/g et dans lequel la densité apparente de l'alumine activée est inférieure à 1 ;
(b) le compactage du mélange dans un moule de forme et taille souhaitée par l'application d'une pression d'au plus 20 kg/cm² ;
(c) le chauffage du moule à une température sélective
(d) le refroidissement du moule et le retrait du bloc d'alumine activée du moule.

9. Procédé de préparation d'un milieu filtrant à bloc d'alumine selon la revendication 8, dans lequel le mélange est compacté dans le moule de taille et forme souhaitée par l'application d'une pression d'au plus 10 kg/cm².

10. Procédé de préparation d'un milieu filtrant à bloc d'alumine selon les revendications 8 à 9, dans lequel le moule est chauffé à une température de 150 °C à 400 °C.

11. Procédé de préparation d'un milieu filtrant à bloc d'alumine selon la revendication 10, dans lequel le moule est chauffé à une température de 180 °C à 300 °C.
